# EUROPEAN PATENT SPECIFICATION

(11) **EP 0 953 471 B1**
(45) Date of publication and mention of the grant of the patent: **13.10.2010**
(21) Application number: 99108276.9
(22) Date of filing: 27.04.1999
(51) Int. Cl.: B60L 15/20, B60L 11/18

(54) **Drive-line damping control for an electric vehicle**
Antriebsstrang-Dämpfungsregelung für ein elektrisches Fahrzeug
Commande d'amortissement de transmission pour un véhicule électrique

(30) Priority: 29.04.1998 US 83397 P; 18.05.1998 US 80148
(43) Date of publication of application: 03.11.1999
(73) Proprietor: Bae Systems Controls, Inc., Johnson City, NY 13790 (US)
(72) Inventor: Lyons, Arthur Paull, Maine, NY 13802 (US); Gataric, Slobodan, Endicott, NY 13760 (US)
(74) Representative: Körber, Martin Hans

(56) References cited:
- EP-A- 0 588 628
- US-A- 4 766 967
- US-A- 4 811 263
- US-A- 5 349 278
- US-A- 5 545 957
- PATENT ABSTRACTS OF JAPAN vol. 1997, no. 12, 25 December 1997 (1997-12-25) & JP 09 205704 A (HITACHI LTD), 5 August 1997 (1997-08-05)

## Description

This invention relates to electrically driven vehicles, and more particularly to such vehicles in which an axle shaft connects the electric motor to a drive wheel.

Electric vehicles are coming into increasing importance because of their supposedly low environmental impact. When a heavyweight vehicle such as a truck or bus is fitted with an electric drivetrain driving the drive wheels through a speed reducing differential and one or more axles, it has been found that acceleration from low speeds is not smooth. Analysis of the perturbations in acceleration have shown that the stiffness of the axle shafts which couple torque to the drive wheels is such that the axle tends to twist, which, in conjunction with the very low friction of the electric drive train, results in oscillations of the vehicle speed.

Smoothly accelerating electric vehicles are desired.

This object is achieved by the invention as defined in claim 1. Dependent claims 2, 3 are further embodiments of the invention.

### Prior art:

US 5 349 278 discloses a torque oscillation compensation system and circuit that uses motor speed to compensate for electrical motor torque pulsations.

US 4 766 967 discloses a feedback system for controlling mechanical oscillations in the torsionally complaint drive train of an electric vehicle.

US 5 545 957 discloses a motor controller including a shaft torsion vibration estimator for estimating a shaft torsion vibration between a motor and a mechanical load and a shaft torque estimator for estimating a shaft torque acting upon a motor shaft.

### Brief description of the drawings:

FIGURE 1 is a simplified representation of an electric vehicle according to the invention;
FIGURE 2 is a simplified block diagram including control portions of the vehicle of FIGURE 1;
FIGURE 3 is an analytic representation of the dynamics of the control and driving system of the vehicle of FIGURE 1; and
FIGURE 4 is a more detailed block diagram of a particular embodiment of a damping signal generator of the arrangement of FIGURE 1.

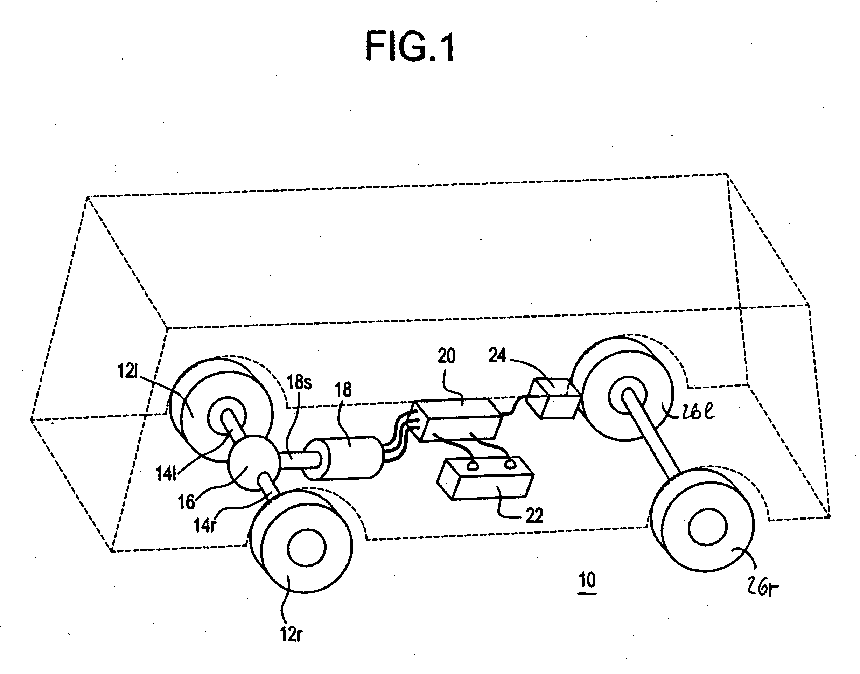

In FIGURE 1, a vehicle 10 includes a pair of drive wheels 12l, 12r, which are attached to axle shafts 14l, 14r. Axle shafts 14 are connected to shafts of a speed-reducing differential 16, which receives torque from the output shaft 18s of an electric motor 18. Motor 18 receives electrical drive from a controller illustrated as a box 20, which includes a control system. Controller 20 receives electrical power from a battery 22, and produces control signals for the motor in response to command torque signals produced by an operator control, illustrated as a box 24. For completeness, vehicle 10 is also illustrated as having front wheels 26l, 26r.

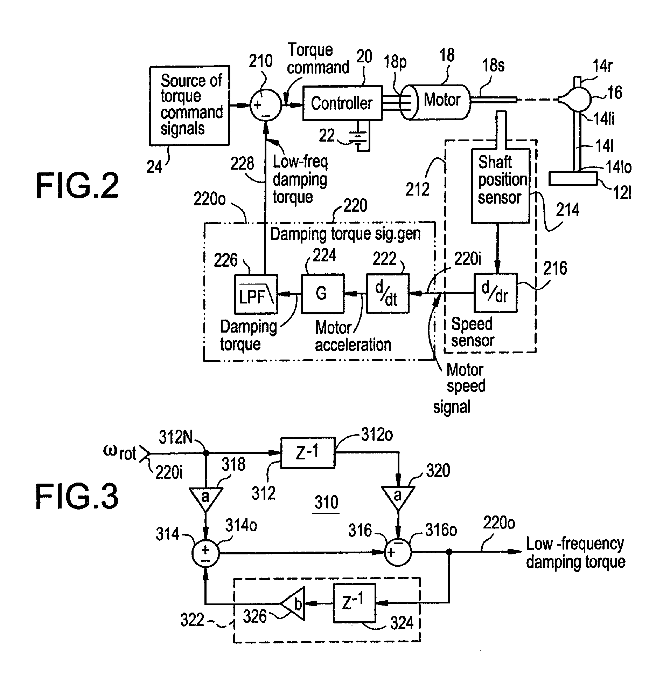

FIGURE 2 is a simplified block diagram of a vehicle according to the invention. In FIGURE 2, elements corresponding to those of FIGURE 1 are designated by like reference numbers. In FIGURE 2, the signals representing the desired torque which are generated by operator control 24 are applied to the noninverting input port of a differencing or error signal generating circuit. Differencing circuit 24 also includes an inverting input port. Differencing circuit 24 subtracts low-frequency components of the damping torque signal applied to its inverting input port from the commanded torque signals applied to its noninverting input port, to thereby generate torque command signals for application to controller 20. Controller 20 processes the torque command signals applied thereto in accordance with its control laws, and produces controlled electrical power, which is applied to the electrical input ports 18p of motor 18. Motor 18 produces the commanded torque.

As mentioned, the stiffness of the axle shafts, in the low-friction environment of electric drive, results in unwanted low-rate variations in vehicle speed. In accordance with the invention, the motor speed is sensed, and a damping torque signal generator generates damping torque signals which are summed with the commanded torque signals, to thereby generate corrected torque command signals which counter the effects of the unwanted variations in speed.

More particularly, a motor speed signal generator 212 in FIGURE 2 includes a shaft position sensor 214 and a differentiator 216, which differentiates the shaft position signals from position sensor 214, to thereby generate motor speed signals. The motor speed signals are applied from motor speed sensor 212 to a damping torque signal generator 220, which produces low-frequency components of damping torque signals on a signal path 228, and applies the signals to the inverting input port of differencing circuit 210. Within damping torque signal generator 220, a differentiator 222 differentiates the motor speed signals from speed sensor block 212, to produce signals related to the motor acceleration. The motor acceleration signals are applied to a gain block 224, where they are multiplied by a constant G to produce damping torque related signals. The damping torque related signals are limited in a low-pass filter 226 to a low frequency, which, for example, may be less than ten Hertz, to produce the low-frequency components of the damping torque on signal path 228. In operation of the vehicle, the low-frequency damping torque signals, when subtracted from the commanded torque, produce torque command signals which, when modified by the control laws of controller 20, command the motor with a varying torque which offsets the torque variations caused by the resonant elements including the axle shafts 14l and 14r.

For purposes of explaining the problem which was discovered in the operation of a vehicle, and the nature of the invention in solving the problem, the fact that there are two axles and wheels on the vehicle may be ignored, and they are treated as one. On the other hand, it is necessary to define the two ends of the axle, which are for simplicity denominated the inboard end and the outboard end. The inboard end of axle shaft 14l is illustrated in FIGURE 2 as 14li, and is coupled to one of the shafts (not separately illustrated) of differential 16. The outboard end of axle shaft 14l is adjacent drive wheel 12l, and is designated 14lo.

FIGURE 3 is a simplified block diagram of an implementation of damping circuit 220 of FIGURE 2. In FIGURE 3, the motor rotational speed signal Kᵣₒₜ is applied to the input port 220i of the damping circuit 220, from which it is applied to an input node 312N of an infinite-impulse response (IIR) transversal filter designated generally as 310. Filter 310 of FIGURE 3 includes a one-clock-cycle delay or Z⁻¹ element 312, which receives the motor rotational speed signal Kᵣₒₜ from node 312N, and delays it, to thereby produce delayed motor rotational speed signal Kᵣₒₜ at its output port 312o. A first summing circuit 314 has both inverting and noninverting input ports, and also includes a sum or output port which is coupled to the noninverting input port of a second summing circuit 316. A first multiplier or gain element 318 multiplies the motor rotational speed signal Kᵣₒₜ from node 312N by a predetermined value, represented as the value "a," and applies the multiplied signal to the noninverting input port of first summing circuit 314. First summing circuit 314 subtracts the value of signal applied to its inverting input port from the value of the multiplied signal applied to the noninverting input port, and couples the resulting output signal to the noninverting input port of second summing circuit 316.

In FIGURE 3, the delayed motor rotational speed signal Kᵣₒₜ at output port 312o of delay element 312 is multiplied by a second multiplier or gain element 320 by a predetermined value, which in this example is the same value "a". The delayed and multiplied signal appearing at the output port of multiplier or gain element 320 is applied to the inverting input port of summing circuit 316. As mentioned, summing circuit 316 subtracts the value of the signal applied to its inverting input port from the value applied to its noninverting input port. The resulting difference signal appears at output port 316o, and corresponds to the low frequency components of the damping torque signal which are applied by damping signal generator 220 to path 228 of FIGURE 2. A feedback signal path designated generally as 322 is coupled between output port 316o of summing circuit 316 and the inverting input port of summing circuit 314. Feedback signal path 322 includes a unit delay element 324 cascaded with a multiplier or gain element 326, which multiplies the delayed signal by a value, designated as "b" in FIGURE 3. The structure represented by FIGURE 3 corresponds to the software which implements one embodiment of the invention.

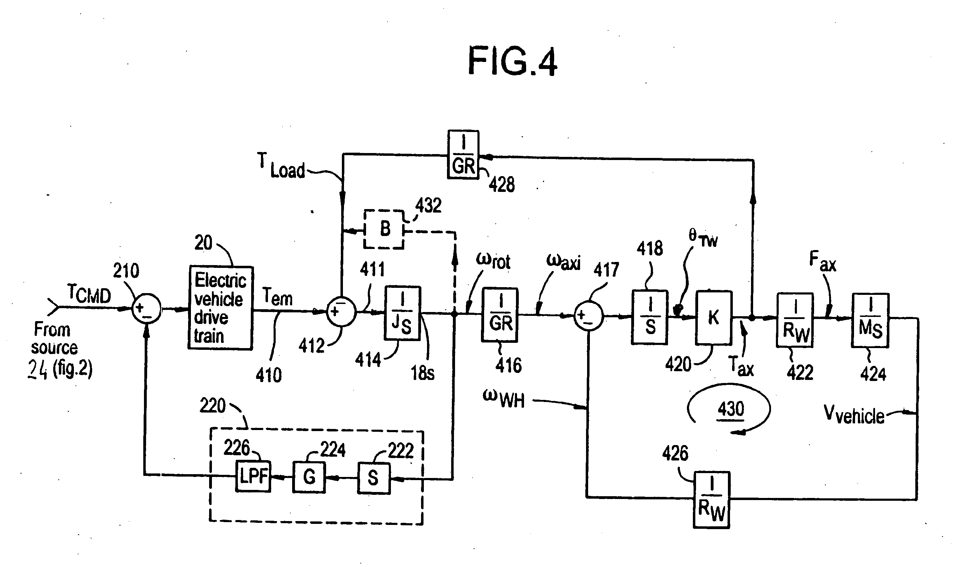

FIGURE 4 is a simplified block diagram expressing the characteristics of the various parts of the vehicle, and their interrelationship. In FIGURE 4, the commanded torque signals from source 20 are applied through differencing circuit 210 to the electric vehicle drive train 20, which includes the controller and the motor. The drive train 20 produces, on a path illustrated as 410, mechanical torque Tₑₘ representing the electric motor torque. The difference between the motor torque and the load torque T_{load} is produced by means of the differencing block designated 412, and the difference appearing on signal path 411 represents the torque applied at the motor output shaft. The motor shaft speed ωᵣₒₜ resulting from the net torque at the motor shaft is determined by 1/Js, where J represents the inertia of the rotor of the motor and the motor shaft, and 1/s represents integration.

In FIGURE 4, the rotational speed ωᵣₒₜ of the motor shaft is applied to a block 416, representing the gear step-down ratio GR of the differential 16 of FIGURE 1, which reduces the rotational speed or rate from ωᵣₒₜ to ωₐₓᵢ at the inboard end 14li of the axle 14l. The rotation of the inboard end 14li of axle shaft 14l, does not, because of the lack of stiffness of the axle shaft, result in immediate rotation of the outboard end of the shaft. Instead, over time (as represented by integrator 418), the difference, generated by differencing block 417, between the rotational speed of the inboard end 14li of the axle shaft (ωₐₓᵢ) and the rotational speed of the outboard end of the axle (the wheel speed ω_{wh} ) results in a change in the twist angle θ_{tw} of the axle at the output of a block 418 representing integration. The twist angle θ_{tw}, when multiplied in block 420 by the stiffness K of the axle shaft, results in a torque Tₐₓ at both ends of the axle shaft 14l. The axle torque Tₐₓ becomes a linear force Fₐₓ when multiplied in a block 422 by a factor 1/R_{wheel} related to the radius of the drive wheel 12l. The linear force Fₐₓ, when multiplied in block 424 by a factor 1/Ms, where M is the mass of the vehicle, and 1/s is an integration, results in vehicle speed V_{vehicle}.

The velocity V_{vehicle} of the vehicle, as represented in FIGURE 4 at the output of block 424, when multiplied by a factor 1/R_{wheel} in feedback block 426, produces the rotational wheel speed ω_{wh} which is subtracted from the inboard axle speed in differencing block 417.

The axle torque Tₐₓ appearing at the output of block 420 of FIGURE 4 is transformed through the gearing of the differential 16 to produce a transformed torque T_{load}, which is fed back to summer 412 for subtraction from the motor torque.

The oscillation, toward the reduction of which the invention is directed, arises from the loop 430 of FIGURE 4, including blocks 417, 318, 420, 422, 424, and 426. Friction is not modeled in FIGURE 4, because its value is so low in the electric power train, at least in part because of the lack of the moving crankshaft, pistons, and the like of an internal combustion engine, and more notably because of lack of a shiftable transmission, which is a major contributor to friction, and therefore to damping. Thus, lack of a shiftable transmission may make unstable a drive train which would be stable in the presence of such a transmission.

Friction B, were it large enough to model in FIGURE 4, would be represented as a phantom-line block 432 connecting the output of block 414 to a further inverting input port of differencing block 412. The friction represented by block 332, were it large enough to provide damping, would feed back a component of torque to tend to overcome the oscillatory component of torque flowing through block 328.

The improvement provided by the damping torque signal generator 220 or FIGURES 2 and 4 functions by sampling the rotational speed Kᵣₒₜ at the output of the motor, and feeding back to the inverting input port of block 210 a component of motor acceleration which, when transformed through the electric vehicle drive train 20 to path 410, provides a damping signal which would be provided by block 432, were there enough friction to provide damping. More particularly, the derivative block 222 artificially provides equivalent inertia J.

The oscillatory variation in speed affects the values of all the variables in loop 430 of FIGURE 4. Thus, the oscillation tends to vary the value of axle torque Tₐₓ. This variation in axle torque is coupled through block 428. If at a particular moment the varying value of axle torque is increasing, the load torque T_{load} at summing point 412 also increases. Summing point 412 subtracts the increasing value of axle torque from the electric motor torque Tₑₘ, to produce a decreasing value of torque at the output of summing point 412. This decreasing value of torque at the output of summing point 412 flows through the inertia of the rotor and rotor shaft represented by block 414, to produce a decreasing value of rotational speed Kₐₓᵢ. The decreasing value of rotational speed returns by way of block 416 to loop 430 to maintain the oscillation, and is also coupled to differentiator 222 of damping signal generator 220. The differentiator generates a negative signal from the decreasing shaft speed Kᵣₒₜₒᵣ. the negative signal from differentiator 222 is amplified and low-pass-filtered, which do not affect the sign of the signal. The negative damping signal is applied from LPF 226 to summing circuit 210, where the negative value is subtracted from the commanded torque. Subtraction of a negative value increases the commanded torque at the output of summing circuit 210. The increased commanded torque flows through the drive train represented by block 20, and appears as an increased motor torque on path 410. The increased motor torque on path 410, when with the increasing load torque, results in a substantially constant value of net torque at the input of block 414, notwithstanding the oscillatory nature of loop 430. The breaking of the variation of feedback due to the oscillation stabilizes the entire vehicle control system.

The disclosed control system may be implemented as hardware, firmware, or software, but software is preferred where possible.

## Claims

1. A motor vehicle (10), comprising:
a source of electric energy (22);
an electric motor (18) including an output shaft (18s);
a source of operator-controlled commanded torque signals (24);
a control system (20) coupled to said source of electric energy (22), to said electric motor (18), and to receive torque command signals, for controlling said motor (18) to produce the commanded torque at said output shaft (18s) of said motor (18);
a mechanical gearbox (16) including an input shaft coupled to said shaft (18s) of said motor (18) and also including an output shaft (14), for reducing the input shaft speed to produce a lower output shaft speed, with a concomitant increase in the output shaft torque;
a drive wheel (12) for supporting and driving said vehicle (10);
an elongated axle shaft (14) coupled to said drive wheel (12) and to said output shaft of said gearbox (16), for thereby coupling torque to said drive wheel (12) from said gearbox (16), said axle shaft (14) having a stiffness which, in conjunction with the mass of said vehicle, tends to produce undesired jerky motion;
motor speed sensing means (212) for producing signals representative of the speed of said motor (18);
differencing means (210) including a noninverting input port coupled to said source of operator-controlled commanded torque signals (24) and also including an inverting input port, for subtracting signal applied to said inverting input port from said commanded torque signals, for generating said torque command signals; **characterized by**
a damping signal generating means (220) coupled to said motor speed sensing means (212) and to said inverting input port of said differencing means (210), for coupling to said inverting input port of said differencing means (210) at least the low-frequency components of motor acceleration, where the frequency is less than or equal 10 Hz; said damping signal generating means (220) comprising an infinite-impulse-response transversal filter (220) including an input port coupled to said motor speed sensing means (212), for receiving said motor speed signals, for generating said damping signals;
said infinite-impulse-response filter (220) comprising:
a delay stage including an input node (220i) coupled to receive said motor speed signals, and also including an output port (220o) at which delayed motor speed signals appear;
a first summing circuit (314) including an inverting input port and a noninverting input port, and an output port (314o) at which the difference between the signals applied to said inverting and noninverting input ports is generated;
a second summing circuit (316) including an inverting input port, and also including a noninverting input port coupled to said output port (314o) of said first summing circuit (314), and further including an output port (316o) at which said damping signals are generated;
a first multiplier (318) coupled to said input node (220i) of said delay stage (312) and to said noninverting input port of said first summing circuit (314), for coupling said motor speed signals from said node (220i) to said noninverting input port of said first summing circuit (314) with a particular gain;
a second multiplier (320) coupled to said output port (312o) of said delay stage (312) and to said inverting input port of said second summing circuit (316), for coupling said delayed motor speed signals from said output port of said delay stage (312) to said inverting input port of said second summing circuit (316) with a second gain; and
a feedback path coupled to said output port (316o) of said second summing circuit (316) and to said inverting input port of said first summing circuit (314), said feedback path including a delay stage (324) and a third multiplier (326) for multiplying feedback signals traversing said feedback path by a third gain.

2. A vehicle (10) according to claim 1, wherein said gearbox is a differential including a second output shaft (14), and said vehicle further comprises a second drive wheel (12), and a second axle coupling said second drive wheel (12) to said second output shaft (14) of said differential.

3. A vehicle (10) according to claim 1 or 2, wherein said second gain (320) equals said particular gain (318).

## Patentansprüche

1. Kraftfahrzeug (10), aufweisend:
eine Quelle (22) für elektrische Energie,
einen Elektromotor (18) mit einer Ausgangswelle (18s),
eine Quelle für Operator-gesteuerte Befohlendrehmomentsignale (24),
ein an die Quelle (22) für elektrische Energie, an den Elektromotor (18) und zum Empfang von Drehmomentbefehlssignalen gekoppeltes Steuerungssystem (20) zur Steuerung des Motors (18), um das befohlene Drehmoment an der Ausgangswelle (18s) des Motors (18) zu erzeugen,
ein mechanisches Getriebe (16) mit einer an die Welle (18s) des Motors (18) gekuppelten Eingangswelle und auch mit einer Ausgangswelle (14) zum Reduzieren der Eingangswellendrehzahl, um eine niedrigere Ausgangswellendrehzahl bei gleichzeitiger Erhöhung des Ausgangswellendrehmoments zu erzeugen,
ein Antriebsrad (12) zum Abstützen und Antreiben des Fahrzeugs (10),
eine an das Antriebsrad (12) und die Ausgangswelle des Getriebes (16) gekuppelte verlängerte Achswelle (14), um dadurch Drehmoment vom Getriebe (16) an das Antriebsrad (12)zu kuppeln, wobei die Achswelle (14) eine Steifigkeit aufweist, die in Verbindung mit der Masse des Fahrzeugs dazu tendiert, eine unerwünschte ruckartige Bewegung zu erzeugen,
eine Motordrehzahl-Abtasteinrichtung (212) zur Erzeugung von für die Drehzahl des Motors (18) repräsentativen Signalen,
eine Differenzbildungseinrichtung (210) mit einem an die Quelle für Operator-gesteuerte Befohlendrehmomentsignale (24) gekoppelten nicht-invertierenden Eingang und auch mit einem invertierenden Eingang zum Subtrahieren eines an den invertierenden Eingang gegebenen Signals von den Befohlenendrehmomentsignalen, um die Drehmomentbefehlssignale zu erzeugen,
**gekennzeichnet durch**:
eine an die Motordrehzahl-Abtasteinrichtung (212) und den invertierenden Eingang der Differenzbildungseinrichtung (210) gekoppelte Dämpfungssignal-Erzeugungseinrichtung (220) zum Koppeln wenigstens der Niedrigfrequenzkomponenten der Motorbeschleunigung, wo die Frequenz kleiner als oder gleich 10 Hz ist, an den invertierenden Eingang der Differenzbildungseinrichtung (210), wobei die Dämpfungssignal-Erzeugungseinrichtung (220) ein Unendlichimpulsantwort- bzw. IIR-Transversalfilter (220) mit einem an die Motordrehzahl-Abtasteinrichtung (212) gekoppelten Eingang zum Empfang der Motordrehzahlsignale, um die Dämpfungssignale zu erzeugen, aufweist, wobei
das Unendlichimpulsantwort- bzw. IIR-Filter (220) aufweist:
eine Verzögerungsstufe mit einem zum Empfang der Motordrehzahlsignale gekoppelten Eingangsknoten (220i) und auch mit einem Ausgang (220o), an dem verzögerte Motordrehzahlsignale erscheinen,
eine erste Summierungsschaltung (314) mit einem invertierenden Eingang und einem nicht-invertierenden Eingang und einem Ausgang (314o), an welchem die Differenz zwischen den an den invertierenden und nicht-invertierenden Eingang angelegten Signalen erzeugt wird,
eine zweite Summierungsschaltung (316) mit einem invertierenden Eingang und auch mit einem an den Ausgang (314o) der ersten Summierungsschaltung (314) gekoppelten nicht-invertierenden Eingang und außerdem mit einem Ausgang (316o), an welchem die Dämpfungssignale erzeugt werden,
einen an den Eingangsknoten (220i) der Verzögerungsstufe (212) und an den nicht-invertierenden Eingang der ersten Summierungsschaltung (314) gekoppelten ersten Multiplizierer (318) zum Koppeln der Motordrehzahlsignale aus dem Knoten (220i) an den nicht-invertierenden Eingang der ersten Summierungsschaltung (314) mit einer bestimmten Verstärkung,
einen an den Ausgang (312o) der Verzögerungsstufe (312) und an den invertierenden Eingang der zweiten Summierungsschaltung (316) gekoppelten zweiten Multiplizierer (320) zum Koppeln der verzögerten Motordrehzahlsignale aus dem Ausgang der Verzögerungsstufe (312) an den invertierenden Eingang der zweiten Summierungsschaltung (316) mit einer zweiten Verstärkung und
einen an den Ausgang (316o) der zweiten Summierungsschaltung (316) und den invertierenden Eingang der ersten Summierungsschaltung (314) gekoppelten Rückkopplungspfad, wobei der Rückkopplungspfad eine Verzögerungsstufe (324) und einen dritten Multiplizierer (326) zum Multiplizieren von den Rückkopplungspfad durchlaufenden Rückkopplungssignalen mit einer dritten Verstärkung aufweist.

2. Fahrzeug (10) nach Anspruch 1, wobei das Getriebe ein Differenzial mit einer zweiten Ausgangswelle (14) ist und das Fahrzeug außerdem ein zweites Antriebsrad (12) und ein das zweite Antriebsrad (12) an die zweite Ausgangswelle (14) des Differenzials kuppelnde zweite Achse aufweist.

3. Fahrzeug (10) nach Anspruch 1 oder 2, wobei die zweite Verstärkung (320) gleich der bestimmten Verstärkung (318) ist.

## Revendications

1. Véhicule à moteur (10), comprenant :
une source d'énergie électrique (22) ;
un moteur électrique (18) comprenant un arbre de sortie (18s) ;
une source de signaux de couple commandés (24) contrôlés par opérateur ;
un système de contrôle (20) couplé à ladite source d'énergie électrique (22), audit moteur électrique (18) et pour recevoir des signaux de commande de couple, afin de contrôler ledit moteur (18) pour produire le couple commandé au niveau dudit arbre de sortie (18s) dudit moteur (18) ;
une boite d'engrenage mécanique (16) comprenant un arbre d'entrée couplé audit arbre (18s) dudit moteur (18) et comprenant également un arbre de sortie (14) pour réduire la vitesse de l'arbre d'entrée afin de produire une vitesse inférieure d'arbre de sortie, avec une augmentation concomitante du couple d'arbre de sortie ;
une roue motrice (12) pour supporter et entraîner ledit véhicule (10) ;
un arbre d'essieu allongé (14) couplé à ladite roue motrice (12) et audit arbre de sortie de ladite boîte d'engrenages (16), afin de coupler le couple à ladite roue motrice (12) à partir de ladite boîte d'engrenages (16), ledit arbre d'essieu (14) ayant une rigidité qui, conjointement à la masse dudit véhicule, a tendance à produire un mouvement de secousse indésiré ;
des moyens de détection de vitesse de moteur (212) pour produire des signaux représentatifs de la vitesse dudit moteur (18) ;
des moyens de différenciation (210) comprenant un orifice d'entrée non inverseuse couplé à ladite source de signaux de couple commandés (24) contrôlés par opérateur et comprenant également un orifice d'entrée inverseuse, pour soustraire le signal appliqué audit orifice d'entrée inverseuse desdits signaux de couple commandés, afin de générer lesdits signaux de commande de couple ;
**caractérisé par** :
des moyens de génération de signal d'amortissement (220) couplés auxdits moyens de détection de vitesse de moteur (212) et audit orifice d'entrée inverseuse desdits moyens de différenciation (210), pour coupler audit orifice d'entrée inverseuse desdits moyens de différenciation (210), au moins les composants à basse fréquence de l'accélération du moteur, où la fréquence est inférieure ou égale à 10 Hz ; lesdits moyens de génération de signal d'amortissement (220) comprenant un filtre transversal récursif (220) comprenant un orifice d'entrée couplé auxdits moyens de détection de vitesse de moteur (212), pour recevoir lesdits signaux de vitesse de moteur, afin de générer lesdits signaux d'amortissement ;
ledit filtre récursif (220) comprenant :
un étage de retard comprenant un noeud d'entrée (220i) couplé pour recevoir lesdits signaux de vitesse de moteur, et comprenant également un orifice de sortie (220o) auquel les signaux de vitesse de moteur retardés apparaissent ;
un premier circuit sommateur (314) comprenant un orifice d'entrée inverseuse et un orifice d'entrée non inverseuse, et un orifice de sortie (314o) auquel la différence entre les signaux appliqués auxdits orifices d'entrée inverseuse et non inverseuse est générée ;
un deuxième circuit sommateur (316) comprenant un orifice d'entrée inverseuse, et comprenant également un orifice d'entrée non inverseuse couplé audit orifice de sortie (314o) dudit premier circuit sommateur (314) et comprenant en outre un orifice de sortie (316o) auquel lesdits signaux d'amortissement sont générés ;
un premier multiplicateur (318) couplé audit noeud d'entrée (220i) dudit étage de retard (312) et audit orifice d'entrée non inverseuse dudit premier circuit sommateur (314), pour coupler lesdits signaux de vitesse de moteur dudit noeud (220i) audit orifice d'entrée non inverseuse dudit premier circuit sommateur (314) avec un gain particulier ;
un deuxième multiplicateur (320) couplé audit orifice de sortie (312o) dudit étage de retard (312) et audit orifice d'entrée inverseuse dudit deuxième circuit sommateur (316), pour coupler lesdits signaux de vitesse de moteur retardés dudit orifice de sortie dudit étage de retard (312) audit orifice d'entrée inverseuse dudit deuxième circuit sommateur (316) avec un deuxième gain ; et
une trajectoire de rétroaction couplée audit orifice de sortie (316o) dudit deuxième circuit sommateur (316) et audit orifice d'entrée inverseuse dudit premier circuit sommateur (314), ladite trajectoire de rétroaction comprenant un étage de retard (324) et un troisième multiplicateur (326) pour multiplier les signaux de rétroaction traversant ladite trajectoire de rétroaction par un troisième gain.

2. Véhicule (10) selon la revendication 1, dans lequel ladite boîte d'engrenages est un différentiel comprenant un deuxième arbre de sortie (14), et ledit véhicule comprend en outre une deuxième roue motrice (12), et un deuxième essieu couplant ladite deuxième roue motrice (12) audit deuxième arbre de sortie (14) dudit différentiel.

3. Véhicule (10) selon la revendication 1 ou 2, dans lequel ledit deuxième gain (320) égale ledit gain particulier (318).
